# EUROPÄISCHE PATENTANMELDUNG

(11) **EP 0 741 156 A1**
(43) Veröffentlichungstag der Anmeldung: **06.11.1996**
(21) Anmeldenummer: 96106518.2
(22) Anmeldetag: 25.04.1996
(51) Int. Cl.: C08G 18/66, C08J 3/03

(54) **Hydroxyfunktionelle Polyurethan-Polyharnstoffe und deren Verwendung als Dispergiermittel**

(30) Priorität: 02.05.1995 DE 19515917
(71) Anmelder: HOECHST AKTIENGESELLSCHAFT, 65926 Frankfurt am Main (DE)
(72) Erfinder: Zöller, Joachim, Dr., 55128 Mainz (DE); Merten, Gerhard, 65205 Wiesbaden (DE); Urbano, Edmund, Dr., 8044 Graz (AT); Gobec, Michael, Dr., 8010 Graz (AT)

(57) **Zusammenfassung**

Wasserdispergierbare Polyurethan-Polyharnstoffe erhältlich durch Umsetzung von einer Polyisocyanatkomponente, bestehend aus mindestens einem organischen Polyisocyanat, mit mindestens einem mit Isocyanaten reaktiven Polyesterpolyol, herstellbar aus einer oder mehreren Dicarbonsäure(n), einem oder mehreren Diole(n), gegebenenfalls einer oder mehreren polyfunktionellen Komponente(n), deren funktionelle Gruppen ausgewählt sind aus Hydroxyl- und Carboxylgruppen und gegebenenfalls einer monofunktionellen Carbonsäure, gegebenenfalls einem mit Isocyanaten reaktiven Fettsäurederivat gegebenenfalls einer höherfunktionellen Verbindung (Funktionalität >2), deren funktionelle Gruppen ausgewählt sind aus Hydroxyl- und Carboxylgruppen, einer Polyalkylenglykol-Komponente mit einer molaren Masse von 750 bis 10000 g/mol, und einer aktiven Wasserstoff enthaltenden Verbindung, in der der aktive Wasserstoff mit den NCO-Gruppen schneller reagiert als Wasser, unter Einhaltung eines Verhältnisses der Zahl der Isocyanatgruppen zur Zahl der Isocyanat-reaktiven Wasserstoffatome, bezogen auf alle Ausgangskomponenten, von 0,6:1 bis 1:1, dadurch gekennzeichnet, daß der Massenanteil an von Polyester abgeleiteten Struktureinheiten im Polyurethan-Polyharnstoff 10 bis 60 % und der Massenanteil an von Polyalkylenglykol abgeleiteten Struktureinheiten 25 bis 75 % beträgt.

## Beschreibung

Die vorliegende Erfindung betrifft Emulgatoren, ein Verfahren zu ihrer Herstellung und deren Verwendung in wäßrigen Dispersionen von Kunstharzen.

Die Palette der wasserverdünnbaren Bindemittelsysteme ist derzeit noch unvollständig, so daß ein Ersatz aller konventionellen Anstrichmittel heute noch nicht möglich ist. Vor allem die Alkydharze für den Zweikomponenten-Lack- und Einbrennlack-Sektor, die allgemein in Form von Lösungen in aliphatischen oder aromatischen Kohlenwasserstoffen zur Anwendung kommen, können derzeit noch nicht vollwertig ersetzt werden. Die niedrigen Festkörpergehalte und die geringe Lagerstabilität wäßriger selbstemulgierender Alkydharze sind, neben einer nur mäßigen Wasserfestigkeit der Filme, die wesentlichen Kritikpunkte der Anwender.

Demgegenüber sollten wäßrige fremdemulgierte Dispersionen von Kunstharzen (z.B. Alkydharzen) eine ideale Lösung des Problems ermöglichen: Auf organische Lösemittel kann hier im allgemeinen verzichtet werden, und der Einsatz von Emulgatoren erlaubt es, sehr gute Lagerstabilität und hohe Festkörpergehalte trotz hoher molarer Masse der Kunstharze zu erhalten. Trotzdem haben auch solche Kunstharzdispersionen bisher keine großen Bedeutung erlangt, da es bisher nicht gelungen ist, das Problem der Stabilisierung der Dispersionen ohne Beeinträchtigung der anderen Eigenschaften optimal zu lösen.

Kunstharze, wie z.B. Alkyd- und Polyesterharze sind überwiegend hydrophobe Substanzen, die von sich aus keine stabile Dispersionen in Wasser bilden. Deshalb müssen Emulgatoren Zugesetzt werden. Emulgatoren sind im allgemeinen Substanzen mit amphipatischem Molekülaufbau, d.h. sie bestehen aus einem hydrophoben und einem hydrophilen Molekülteil. Infolge dieses Aufbaus reichern sich die Emulgatormoleküle in der Grenzschicht Wasser-Harz an, setzen die Grenzflächenspannung herab und ermöglichen damit die Bildung feinster Harztröpfchen in der wäßrigen Phase.

Daher war die der Erfindung zugrundeliegende Aufgabe, Emulgatoren zu entwickeln, die insbesondere Melaminharz- und Isocyanat-vernetzbare Kunstharze als Dispersion in Wasser stabilisieren können, und die die Filmeigenschaften insbesondere in Bezug auf Glanz, Reaktivität, Chemikalien-, Wetter- und Wasserfestigkeit nicht negativ beeinflussen.

Überraschenderweise konnte das mit Polyurethan-Polyharnstoff-Emulgatoren erreicht werden, die als hydrophoben Teil hydroxyfunktionelle Polyester tragen.

Die Synthese von hochmolekularen Polyurethan-Polyharnstoffen durch Kettenverlängerung in der wäßrigen Phase ist bekannt und beispielsweise in der DE-A 26 24 442 sowie in der EP-A 0 089 497 beschrieben. Die Eignung von bestimmten Polyurethan-Polyharnstoffen als Emulgatoren war jedoch nicht bekannt.

Bisher hat man bei Alkydharz-Dispersionen die besten Ergebnisse mit nichtionischen Emulgatoren erzielt, die durch Kondensation von Äthylenoxid an Octyl- oder Nonylphenol entstehen. d.h. bei denen der hydrophobe Teil aus dem Alkylphenolrest und der hydrophile Teil aus der Polyäthylenglykolkette besteht. Solche Systeme werden in den Patentschriften US-A 3 223 658, US-A 3 269 967, US-A 3 440 193 bzw. den Offenlegungsschriften DD 88 833 und DE-A 27 54 091 beschrieben. Mit derartigen Emulgatoren bekommt man bei Zusatzmengen von 5 bis 10 % Alkydharz-Dispersionen mit brauchbarer Stabilität. Der Nachteil besteht darin, daß diese Emulgatoren relativ niedermolekular sind und somit als "interne Weichmacher" im Alkydharzfilm fungieren.

In den deutschen Offenlegungsschriften DE-A 27 54 141, 27 54 092 und 24 40 946 werden Alkydharzdispersionen beschrieben, die mit Hilfe von Emulgatoren in der wäßrigen Phase stabilisiert werden, die Polyäthylenglykole, Fettsäuren und/oder Allyläther enthalten.

Die EP-A 0 501 247 beschreibt olefinisch ungesättigte Polyurethane enthaltend eine β, γ -äthylenisch ungesättigte Ätheralkohol-Komponente und deren Verwendung als reaktive Emulgatoren. Sie werden hauptsächlich als Emulgatoren für ungesättigte Polyesterharze eingesetzt, sind jedoch für Alkydharze ungeeignet.

Diese Emulgatoren können durch ihre Doppelbindungen in den Film während der oxydativen Trocknung eingebaut werden. Dadurch können Filme erhalten werden, die eine verbesserte Wasserfestigkeit aufweisen. Für Einbrenn- bzw. Zwei-Komponenten- Anwendungen sind sie aufgrund fehlender reaktiver Gruppen nicht geeignet. Auch erlaubt die niedrige molare Masse dieser Emulgatoren eine beschränkte Migration der Emulgatoren im Film, wodurch die Eigenschaften des gebildeten Filmes leiden.

Ein weiteres Problem dieser Alkydharzemulsionen ist neben der langsamen Trocknung, die schlechte Pigmentierbarkeit: nach den oben beschriebenen Verfahren können keine glänzenden hochpigmentierten Filme erhalten werden.

Aufgabe der vorliegenden Erfindung war es daher, solche wäßrigen Lacksysteme zu finden, die sich gegenüber dem bekannten Stand der Technik durch verbesserte Eigenschaften, insbesondere hinsichtlich der Reaktivität, Filmhärte, Pigmentierbarkeit und Lagerstabilität auszeichnen.

Diese Aufgabe konnte mit der Bereitstellung der nachstehend näher beschriebenen hydrophilen Polyurethan-Polyharnstoffe bzw. mit deren nachstehend ebenfalls näher beschriebenen Verwendung gelöst werden.

Gegenstand der Erfindung sind wäßrige Polyurethan-Polyharnstoffe erhältlich durch Umsetzung von:
a) einer Polyisocyanatkomponente, bestehend aus mindestens einem organischen Polyisocyanat, mit
b) mindestens einem mit Isocyanaten reaktiven Polyesterpolyol, herstellbar aus
   i einer oder mehreren Dicarbonsäure(n)
   ii einem oder mehreren Diole(n) und
   iii gegebenenfalls einer oder mehreren polyfunktionellen Komponente(n), deren funktionelle Gruppen ausgewählt sind aus Hydroxyl- und Carboxyl-Gruppen
   iv gegebenenfalls einer monofunktionellen Carbonsäure,
c) gegebenenfalls einem mit Isocyanaten reaktiven Fettsäurederivat,
d) gegebenenfalls einer höherfunktionelle Verbindung (Funktionalität größer als 2), deren funktionelle Gruppen ausgewählt sind aus Hydroxyl- und Carboxyl-Gruppen, und
e) einer Polyalkylenglykol-Komponente mit einer zahlenmittleren molaren Masse von 750 bis 10000 g/mol und
f) einer aktive Wasserstoffatome enthaltenden Verbindung, in der der aktive Wasserstoff mit den NCO-Gruppen schneller reagiert als Wasser,
unter Einhaltung eines Verhältnisses der Zahl der Isocyanatgruppen zur Zahl der Isocyanat-reaktiven Wasserstoffatome bezogen auf alle Ausgangskomponenten a) bis f), von 0,6:1 bis 1:1, dadurch gekennzeichnet, daß der Massenanteil an von Polyester abgeleiteten Struktureinheiten im Emulgatorharz 10 bis 60 %, bevorzugt 12 bis 40 % und besonders bevorzugt 18 bis 30 % und der Massenanteil an von Polyalkylenglykol abgeleiteten Struktureinheiten im Emulgatorharz 25 bis 75 %, bevorzugt 30 bis 60 % beträgt.

Gegenstand der Erfindung ist auch die Verwendung dieser Polyurethan-Polyharnstoffe als reaktive Emulgatoren für an sich in Wasser nicht dispergierbare, härtbare Kunstharze bei der Herstellung von wäßrigen Kunstharzdispersionen.

Als Kunstharze können Polyester, Polyurethane, Alkydharze und andere kommerziell erhältliche Harze verwendet werden; besonders geeignet sind die erfindungsgemäßen Polyurethan-Polyharnstoffe als Emulgatoren für Alkydharze.

Als Alkydharze werden bevorzugt handelsübliche Typen eingesetzt, die unter Umständen zur Erhöhung der Lagerstabilität geringfügig modifiziert werden. In der Regel werden die Harze bei der Herstellung der Dispersionen in lösemittelfreiem Zustand eingesetzt, es können aber auch geringe Mengen Lösemittel zugesetzt werden. Zur Erhöhung der Lagerstabilität kann das Alkydharz so modifiziert werden, daß es möglichst geringe Säurezahlen aufweist. Diese Modifizierung kann einerseits während der Herstellung des Alkydharzes erfolgen durch Veresterung mit weiteren Alkoholen, andererseits können die Säuregruppen auch nachträglich mit Hilfe eines Epoxids verestert werden. Als Epoxidverbindungen kommen alle Monoepoxide in Frage, die beispielsweise in dem Handbuch "Epoxidverbindungen und Epoxidharze" von A.M. Paquin, Springer Verlag, Berlin 1958, Kapitel IV, und im "Handbook of Epoxy Resins" von Lee und Neville, 1967, Kapitel 2 beschrieben sind. Besonders geeignet sind epoxidierte Fettsäuren sowie z.B. ®Cardura E10 (®Versaticsäureglycidylester der Shell Chemical).

Bei den erfindungsgemäßen Polyurethan-Polyharnstoffen handelt es sich im wesentlichen um Umsetzungsprodukte der bereits obengenannten Ausgangskomponenten (a) bis (f), wobei bei der Herstellung der Polyurethan-Polyharnstoffe vorzugsweise pro 1 mol der Komponente (a) 0,05 bis 0,4 mol der Komponente (b), 0 bis 0,3 mol der Komponente (c), 0 bis 0,6 mol der Komponente (d), 0,1 bis 0,8 mol der Komponente (e) und 0,01 bis 0,3 mol der Komponente (f) zum Einsatz gelangen. Besonders bevorzugt werden je 1 mol der Komponente (a) 0,05 bis 0,25 mol der Komponente (b), 0,05 bis 0,25 mol der Komponente (c), 0,05 bis 0,4 mol der Komponente (d), 0,2 bis 0,6 mol der Komponente (e) und 0,02 bis 0,25 mol der Komponente (f) eingesetzt.

Die Komponente (a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise eine molare Masse von 168 bis 1.000 g/mol, vorzugsweise 168 bis 300 g/mol aufweisen. Bevorzugt werden Diisocyanate eingesetzt. Es können jedoch auch bis zu 10 % der Diisocyanate durch drei- oder höherfunktionelle Isocyanate ersetzt werden. Bevorzugt werden solche Isocyanatverbindungen, bei denen die Isocyanatgruppen an aliphatische Kohlenstoffatome gebunden sind. Geeignet sind beispielsweise 1,6-Diisocyanatohexan (HDI), 1-Isocyanato-3,3,5-trimethyl-5-isocyanatomethyl-cyclohexan (IPDI), m-Tetramethylxylylendiisocyanat (TMXDI), 4,4'-Diisocyanatodicyclohexylmethan, ebenso auch 4,4'-Diisocyanatodiphenylmethan, dessen technischen Gemische mit 2,4'-Diisocyanatodiphenylmethan und gegebenenfalls Oligomeren dieser Diisocyanate, 2,4-Diisocyanatotoluol und dessen technische Gemische mit 2,6-Diisocyanatotoluol. Diisocyanate der beispielhaft genannten Art sind als Komponente (a) bevorzugt, jedoch sind auch höherfunktionelle Polyisocyanate wie beispielsweise biuret-, isocyanurat- oder urethanmodifizierte Polyisocyanate auf Basis der beispielhaft genannten einfachen Diisocyanate grundsätzlich geeignet. Diese Derivate weisen im allgemeinen eine molare Masse bis zu 1.000 g/mol auf.

Die Herstellung derartiger Derivate ist beispielsweise in US-A 3 124 605, US-A 3 183 112, US-A 3 919 218 oder US-A 4 324 879 beschrieben.

Die hydroxyfunktionellen Polyester (b) sind lineare oder verzweigte Polyester mit einer Hydroxylzahl (OHZ) von 30 bis 180 mg/g und einer Säurezahl (SZ) von 1 bis 15 mg/g. Sie werden nach üblichen Polykondensationsmethoden aus Dicarbonsäuren, Diolen und gegebenenfalls höherfunktionellen Verbindungen aufgebaut, wobei die Dicarbonsäurekomponente (i) ausgewählt ist aus gesättigten und ungesättigten aliphatischen, aromatischen und cycloaliphatischen Dicarbonsäuren, Dimerfettsäuren sowie aus Mischungen zweier oder mehrerer dieser Dicarbonsäuren. Beispiele für diese Dicarbonsäuren sind Oxal-, Malon-, Glutar-, Pimelin-, Adipin-, Azelain-, Sebacin-, Bernstein-, Fumar-, Malein- und Itaconsäure, 1,3-Cyclopentandicarbonsäure, 1,2-Cyclohexandicarbonsäure, 1,3-Cyclohexandicarbonsäure, 1,4-Cyclohexandicarbonsäure, Phthal-, Terephthal-, Isophthalsäure, Tetrahydrophthalsäure, 2,5-Norbornandicarbonsäure, 1,4-Naphthalindicarbonsäure, 4,4'-Diphenyldicarbonsäure, 4,4'-Sulfonyldibenzoesäure und 2,5-Naphthalindicarbonsäure sowie deren Ester und deren Anhydride.

Bevorzugte Dicarbonsäuren (i) sind Phthal-, Isophthal-, und Terephthalsäure, Tetrahydrophthalsäure, Adipinsäure, Bernsteinsäure, Bernsteinsäureanhydrid, Dimerfettsäuren, Sebacin- und Azelainsäure, 1,3- und 1,4-Cyclohexandicarbonsäure und Glutarsäure sowie deren Ester und Anhydride.

Die Glykolkomponente (ii) kann aus niedermolekularen aliphatischen, cycloaliphatischen oder aromatischen Glykolen bestehen. Als Beispiele für die Glykole seien genannt: Äthylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, Perhydro-bisphenol A, p-Xylylendiol, 2-Äthyl- und 2-Butylpropandiol.

Als höherfunktionelle Komponente (iii), die bevorzugt 3 bis 6 Hydroxyl- und/oder Carboxylgruppen enthält, werden Polyole wie Trimethylolpropan, Trimethyloläthan, Glycerin, Ditrimethylolpropan, Pentaerythrit, Dipentaerythrit; Polycarbonsäuren wie Trimellithsäure(anhydrid), Pyromellithsäure(anhydrid) und Benzophennontetracarbonsäure; Hydroxycarbonsäuren wie Dimethylolpropionsäure, Dihydroxypropionsäure, Dihydroxybernsteinsäure, Äpfelsäure, Weinsäure, Mesoweinsäure und Dihydroxyhexansäure; sowie Polyanhydride wie in DE-A 28 11 913 beschrieben oder Mischungen zweier oder mehrerer dieser Verbindungen bevorzugt, wobei der Anteil der höherfunktionellen Komponente (iii) bevorzugt 0 bis 30 mol je 100 mol aller Komponenten (i) bis (iv), beträgt.

Besonders bevorzugt ist der Einsatz von Trimethylolpropan als Verzweigungsmittel (iii).

Die monofunktionelle Carbonsäurekomponente (iv) kann aus aliphatischen gesättigten und ungesättigte Monocarbonsäuren bestehen. Besonders bevorzugt sind lineare ungesättigte Monocarbonsäuren mit 10 bis 22 Kohlenstoffatomen, wie sie beispielsweise in natürlichen Fetten und Ölen vorkommen. Spezielle Beispiele für geeignete gesättigte Fettsäuren sind 2-Äthylhexansäure, Isononansäure, Laurinsäure, ®Versaticsäure oder Cocosfettsäure.

Geeignete ungesättigte Fettsäuren sind beispielsweise Ölsäure, Linolsäure und Linolensäure. Besonders bevorzugt sind ungesättigte Monocarbonsäuren mit einer Jodzahl über 125 g/(100 g) und 16 bis 20 Kohlenstoffatomen. Hierunter fallen besonders isoliert ungesättigte Fettsäuren mit zwei oder drei isolierten Doppelbindungen verschiedener sterischer Konfiguration oder entsprechende Fettsäuren mit konjugierten Doppelbindungen. Solche Fettsäuren sind beispielsweise in natürlichen Ölen wie Leinöl, Sojaöl, Saffloröl, Baumwollsaatöl oder Ricinusöl, Sonnenblumenöl, Erdnußöl, Holzöl und Ricinenöl enthalten. Die daraus gewonnenen ungesättigten Fettsäuren sind Leinölfettsäure, Safflorölfettsäure, Tallölfettsäure, Baumwollsaatfettsäure, Erdnußölfettsäure, Holzölfettsäure, Ricinenfettsäure oder Sonnenblumenölfettsäure.

Die Fettsäuren können auch durch Umesterung aus den jeweiligen Ölen während der Synthese in den Polyester eingeführt werden.

Das gegenüber Isocyanaten reaktive Fettsäurederivat (c) enthält 10 bis 40 Kohlenstoffatome, mindestens eine Hydroxyl- oder Aminogruppe und gegebenenfalls mindestens eine oder mehrere C = C - Doppelbindungen. Beispiele dieser Fettsäurederivate sind Fettalkohole, wie Laurylalkohol, Stearylalkohol, Oleylalkohol, Linoleylalkohol oder Linolenylalkohol. Es können auch oxäthylierte Fettalkohole eingesetzt werden, die 1 bis 30, vorzugsweise 1 bis 20 Äthylenoxideinheiten enthalten, wie zum Beispiel ®Genapol O-020 (Hoechst AG). Weiterhin sind die Alkohole zu nennen, die durch eine Umsetzung aus einer ungesättigten Säure und einem Epoxid erhalten werden, wie zum Beispiel durch Umsetzung einer Fettsäure wie Leinölfettsäure oder Sojaölfettsäure mit einem Epoxid wie ®Cardura E10 oder anderen Epoxiden. Es können auch Teilester von Polyhydroxylverbindungen, wie Glycerin, Trimethylolpropan oder Pentaerythrit sowie partiell hydrolysierte Fette eingesetzt werden wie zum Beispiel ®Ligalub 40/1 (Fettsäureglycerinmonoester von P. Graeven Fettchemie). Des weiteren kommen auch die Fettamine wie zum Beispiel ®Genamin-Typen (Hoechst AG) in Frage.

Als höherfunktionelle Komponente (d), die bevorzugt 3 bis 6 Hydroxyl- und/oder Carboxylgruppen enthält, können beispielsweise Trimethylolpropan, Trimethyloläthan, Glycerin, Ditrimethylolpropan, Pentaerythrit und Dipentaerythrit eingesetzt werden. Ebenso werden Hydroxyalkancarbonsäuren, besonders Bishydroxyalkan-Carbonsäuren wie z.B. Dimethylolpropionsäure bevorzugt, wobei auch Glykolsäure, Äpfelsäure, Weinsäure oder 2,6-Dihydroxybenzoesäure eingesetzt werden können. Ebenso sind die Mischungen zweier oder mehrerer dieser Verbindungen möglich.

Bei der Komponente (e) handelt es sich um lineare Polyoxyalkylenglykole (Polyätherglykole) mit einer zahlenmittleren molaren Masse von 750 bis 10.000 g/mol, vorzugsweise 1.000 bis 6.000 g/mol, wobei von 100 mol Alkylenoxideinheiten zumindest 80 mol, vorzugsweise 100 mol Äthylenoxideinheiten sind.

Der Begriff "Polyäthylenglykole" soll somit nicht nur echte Polyäthylenglykole, deren Alkylenoxideinheiten ausschließlich Äthylenoxideinheiten sind, sondern auch solche Polyalkylenglykole umfassen, deren Alkylenoxideinheiten überwiegend, d.h. zumindest zu 80 mol von 100 mol Äthylenoxideinheiten sind. Derartige "gemischte" Polyalkylenglykole entstehen beispielsweise durch Verwendung von Gemischen verschiedener Alkylenoxide, beispielsweise von Äthylenoxid und Propylenoxid im Stoffmengenverhältnis von circa 8:2, bei der Herstellung der Polyätherglykole durch Alkoxylierung geeigneter zweiwertiger Startermoleküle wie beispielsweise Wasser, Äthylenglykol oder Propylenglykol.

Als Komponente (f) werden solche Verbindungen eingesetzt, die auch als "Kettenverlängerer" bezeichnet werden. Als Beispiel seien höherfunktionelle primäre und sekundäre Amine, Hydrazin und substituierte Hydrazine genannt.

Besonders bevorzugt sind Di- und Polyamine wie z.B. Äthylendiamin, Butylendiamin, Toluylendiamin, Isophorondiamin, 3,3'-Dichlorbenzidin; Polyalkylenpolyamine wie Triäthylentetramin, Diäthylentriamin; Hydrazin und substituierte Hydrazine, wie Dimethylhydrazin. Weiterhin sind auch solche Kettenverlängerer geeignet, die zusätzliche funktionelle Gruppen tragen, wie zum Beispiel Alkanolamine, wie N-Aminoäthyläthanolamin, Äthanolamin und Diäthanolamin. Es können auch Carboxylgruppen enthaltende Amine oder Hydrazide wie zum Beispiel Lysin, Glutaminsäure und Adipinsäuremonohydrazid verwendet werden.

Die Herstellung der erfindungsgemäßen, als Emulgatoren zu verwendenden hydrophilen Polyurethane erfolgt in zwei Stufen. Zunächst wird ein hydrophiles isocyanatfunktionelles Präpolymer aus den Komponenten (a) bis (e) synthetisiert, das dann nach der Dispergierung in Wasser mit den unter (f) beschriebenen Kettenverlängerern zur Reaktion gebracht wird.

Die Herstellung des Präpolymeren durch Umsetzung der genannten Ausgangskomponenten (a) bis (e) kann in Substanz oder in gegenüber Isocyanatgruppen inerten Lösungsmitteln wie Ketonen, tertiären Alkoholen, (substituierten) Aromaten, Äthern oder Estern wie beispielsweise Aceton, Methyläthylketon, Äthylacetat, Butylacetat, N-Methylpyrrolidon, Toluol oder Gemischen derartiger Lösungsmittel erfolgen, wobei vorzugsweise Reaktionstemperaturen von 20 bis 200 °C, insbesondere von 50 bis 150 °C, eingehalten werden.

Dabei können die Komponenten (b) bis (e) gleichzeitig oder schrittweise mit der Komponente (a) zur Reaktion gebracht werden.

In der Praxis kann somit beispielsweise so vorgegangen werden, daß die Komponenten (b) bis (e) vorgelegt und innerhalb der obengenannten Temperaturbereiche mit dem Isocyanat (a) umgesetzt wird, bis der NCO-Gehalt auf einen bestimmten, zu berechnenden Wert, abgefallen ist.

Dieses Präpolymer wird dann in Wasser dispergiert und bei Temperaturen von 40 bis 100 °C mit der Komponente (f) unter Kettenverlängerung zur Reaktion gebracht. Nach einer Reaktionszeit von 1 bis 5 Stunden erhält man dann nach gegebenenfalls weiterer Zugabe von Ammoniak oder Aminen die wäßrige Dispersion des Emulgators.

Grundsätzlich werden hierbei Art und Mengenverhältnisse der Ausgangskomponenten innerhalb der genannten Bereiche so gewählt, daß, bezogen auf alle Komponenten (a) bis (f), ein Verhältnis der Anzahl der Isocyanatgruppen zur Anzahl der reaktiven Wasserstoffatome von 0,6:1 bis 1:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 %, bezogen auf die Masse der gesamten Mischung, vor vorzeitiger und unerwünschter Polymerisation bzw. Oxydation geschützt werden.

Die auf diese Weise erhaltenen hydrophilen, ungesättigte Gruppen aufweisenden Polyurethan-Polyharnstoffe weisen eine zahlenmittlere molare Masse (Gelpermeationschromatographie, Polystyrol als Standard) Mₙ von 2 bis 40 kg/mol, vorzugsweise 2 bis 20 kg/mol, einen Massengehalt an olefinischen Doppelbindungen (berechnet als -C = C-, molare Masse = 24 g/mol) von 0 bis 6 %, vorzugsweise 0,1 bis 4 %, einen Massengehalt an Polyesterbausteinen von 15 bis 60 %, vorzugsweise 18 bis 40 % und einen Massengehalt an über Polyäthylenglykol eingebauten Äthylenoxideinheiten -CH₂-CH₂-O- von 25 bis 75 %, vorzugsweise 30 bis 60 %, auf.

Die hydrophilen Polyurethan-Polyharnstoffe sind wertvolle Emulgatoren für hydrophobe, in Wasser nicht dispergierbare Kunstharze. Diese Kunstharze weisen eine (Gelpermeationschromatographie, Polystyrol als Standard) zahlenmittlere molare Masse (Mₙ) von 500 bis 10.000, vorzugsweise 500 bis 5.000 g/mol auf. Insbesondere eignen sie sich als Emulgator für Alkydharze und ölfreie Polyester, bevorzugt auch für mit ungesättigten Fettsäuren modifizierte Polyester.

Zur Herstellung solcher Kunstharzdispersionen werden zunächst diese Kunstharze mit den oben beschriebenen Polyurethan-Polyharnstoffdispersionen gemischt, gegebenenfalls in Anwesenheit der oben beschriebenen inerten Lösemittel. Dabei kann Aufheizen der Mischung auf Temperaturen von ca. 30 bis ca. 100 °C erforderlich sein.

In den Gemischen liegen 40 bis 97, vorzugsweise 50 bis 95 Gew.-Teile der genannten hydrophoben Kunstharze in Abmischung mit 3 bis 60, vorzugsweise 5 bis 50 Gew.-Teilen der genannten, als Emulgatoren wirkenden, hydrophilen Polyurethan-Polyharnstoffdispersionen vor. Es ist jedoch wichtig, Art und Mengenverhältnisse der Einzelkomponenten im Rahmen der gemachten Ausführungen so zu wählen, daß der Massengehalt der in Wasser dispergierbaren Gemische an von der Komponente (e) herrührenden Äthylenoxideinheiten maximal 20, vorzugsweise maximal 15 %, beträgt.

Die Gemische aus Kunstharzen und Emulgator-Dispersion werden dann in Wasser dispergiert, was sowohl durch einfaches Einrühren von Wasser in die vorgelegte Mischung der Kunstharze mit der Emulgatoremulsion mittels üblicher Dissolver oder Rührer, wie auch durch Eingießen der Mischung in Wasser unter heftigem Rühren erfolgen kann. Gegebenenfalls kann zunächst ein Teil des Wassers zu der oben beschriebenen Mischung gegeben werden und dann diese Mischung unter Rühren in die Restmenge Wasser gegossen werden. Es können auf diese Weise stabile Öl-in-Wasser-Emulsionen erhalten werden.

Die auf diese Weise erhaltenen wäßrigen Dispersionen sind wertvolle wäßrige Bindemittel für Überzugsmittel. Sie können allein oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen auf beliebigen Substraten verwendet werden.

Geeignete Substrate sind Papier, Kartonage, Leder, Holz, Kunststoffe, Vlies, Folien, Textilien, keramische Materialien, mineralische Materialien, Glas, Metall, beschichtetes Metall, Kunstleder, photographische Materialien wie z.B. mit photographischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösungsmitteln kann die Vernetzung der Überzüge durch Reaktion mit Melaminharzen oder Isocyanaten bei Temperaturen bis zu 250 °C, oder durch oxydative Trocknung erfolgen.

In den nachfolgenden Beispielen beziehen sich alle Prozentangaben auf Massengehalte.

### Beispiele

### Herstellung der Polyurethan-Polyharnstoffdispersionen

### Beispiel E1

26,8 g Dimethylolpropionsäure werden bei ca. 80 °C in 100 g Polyäthylenglykol 1000 suspendiert. Nach Erwärmen auf 70 °C wird dann 51 g Tetramethylxylylendiisocyanat (TMXDI) und 36,6 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange bis der Isocyanatgehalt auf 3,8 % gefallen ist. Dann wird 30 g ®Genapol O-100 und 121 g eines Polyesters aus Isophthalsäure, Adipinsäure, Dimerfettsäure und Hexandiol (OHZ 46 mg/g, SZ 2 mg/g) zugegeben und bei 90 °C solange gerührt, bis der NCO-Gehalt auf 1,15 % gefallen ist. Dann wird unter heftigem Rühren 400 g erwärmtes entionisiertes Wasser (E-Wasser) innerhalb von 10 Minuten zugegeben. Direkt im Anschluß wird 3,75 g Triäthylentetramin, gelöst in 37,5 g Wasser, schnell (ca. 5 min) zugetropft. Nach Zugabe von 4,5 g Triäthylamin und einer Reaktionszeit von 3 Stunden bei 80 °C werden weitere 4,4 g Triäthylamin und 1000 g E-Wasser zugegeben, dann wird abgekühlt. Man erhält eine pastöse Dispersion.

### Beispiel E 2

26,8 g Dimethylolpropionsäure werden bei ca. 80 °C in 100 g Polyäthylenglykol 1000 suspendiert. Nach Erwärmen auf 70 °C wird dann 51 g Tetramethylxylylendiisocyanat (TMXDI) und 36,6 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange bis der Isocyanatgehalt auf 3,8 % gefallen ist. Dann wird 30 g Genapol O-100 und 60 g eines Polyesters aus Isophthalsäure, Adipinsäure, Neopentylglykol und Trimethylolpropan (OHZ 107 mg/g, SZ 3 mg/g) zugegeben und bei 90 °C solange gerührt, bis der NCO-Gehalt auf 1,4 % gefallen ist. Dann wird unter heftigem Rühren 400 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach Zugabe von 4,5 g Triäthylamin und einer Reaktionszeit von 3 Stunden bei 80 °C werden weitere 4,4 g Triäthylamin und 1000 g E-Wasser zugegeben, dann wird abgekühlt. Man erhält eine pastöse Dispersion.

### Beispiel E 3

26,8 g Dimethylolpropionsäure werden bei ca. 80 °C in 50 g Polyäthylenglykol 1000 und 100 g Polyäthylenglykol 2000 suspendiert. Nach Erwärmen auf 70 °C wird dann 51 g Tetramethylxylylendiisocyanat (TMXDI) und 36,6 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange, bis der Isocyanatgehalt auf 3,2 % gefallen ist. Dann wird 117 g eines Polyesters aus Isophthalsäure, Adipinsäure und Neopentylglykol (OHZ 95 mg/g, SZ 4 mg/g) zugegeben und bei 90 °C solange gerührt, bis der NCO-Gehalt auf 1,1 % gefallen ist. Dann wird unter heftigem Rühren 400 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach Zugabe von 4,5 g Triäthylamin und einer Reaktionszeit von 3 Stunden bei 80 °C werden weitere 4,4 g Triäthylamin und 1000 g E-Wasser zugegeben, dann wird abgekühlt. Man erhält eine pastöse Dispersion.

### Beispiel E 4

400 g Polyäthylenglykol 4000 werden im Kolben vorgelegt. Nach Erwärmen auf 70 °C wird 49 g Tetramethylxylylendiisocyanat (TMXDI) so zugetropft, daß eine Temperatur von 90 °C nicht überschritten wird (ca. 30 min). Hat man alles Isocyanat zugetropft, so läßt man solange bei dieser Temperatur nachrühren, bis der Isocyanatgehalt auf 1,9 % gefallen ist. Dann wird 117 g eines Polyesters aus Isophthalsäure, Adipinsäure und Neopentylglykol (OHZ 95 mg/g, SZ 4 mg/g) zugegeben und bei 90 °C solange gerührt, bis der NCO-Gehalt auf 0,75 % gefallen ist. Dann wird unter heftigem Rühren 400 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach einer Reaktionszeit von 3 Stunden bei 80 °C werden weitere 1000 g E-Wasser zugegeben, dann wird abgekühlt. Man erhält eine pastöse Dispersion.

### Beispiel E 5

26,8 g Dimethylolpropionsäure werden bei ca. 80 °C in 100 g Polyäthylenglykol 1000 suspendiert. Nach Erwärmen auf 70 °C wird dann 51 g Tetramethylxylylendiisocyanat (TMXDI) und 36,6 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange bis der Isocyanatgehalt auf 3,8 % gefallen ist. Dann wird 30 g Genapol O-100 und 71 g eines Polyesters aus Isophthalsäure, Adipinsäure, Sojaölfettsäure, Neopentylglykol und Trimethylolpropan (OH-Zahl 90 mg/g, Säurezahl 5 mg/g) zugegeben und bei 90 °C solange gerührt, bis der NCO-Gehalt auf 1,3 % gefallen ist. Dann wird unter heftigem Rühren 400 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach Zugabe von 4,5 g Triäthylamin und einer Reaktionszeit von 3 Stunden bei 80 °C werden weitere 4,4 g Triäthylamin und 1000 g E-Wasser zugegeben und abgekühlt. Man erhält eine pastöse Dispersion.

### Beispiel E 6

26,8 g Dimethylolpropionsäure werden bei ca. 80 °C in 150 g Polyäthylenglykol 1500 und 27 g Ocenol HD 150 (ungesättigter Fettalkohol Jodzahl 130) suspendiert. Nach Erwärmen auf 70 °C wird dann 49 g Tetramethylxylylendiisocyanat (TMXDI) und 35 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 85 °C. Man hält die Temperatur solange bis der Isocyanatgehalt auf ca. 1,5 % gefallen ist. Dann wird unter heftigem Rühren 475 g erwärmtes E-Wasser, das mit 3,5 g Diäthylentriamin versetzt wurde, innerhalb 10 Minuten zugegeben. Nach einer Reaktionszeit von 3 Stunden bei 80 °C werden 7 g 25 %iges Ammoniakwasser verdünnt mit 64 g E-Wasser zugegeben und abgekühlt. Man erhält eine pastöse Dispersion.

### Dispersionen

### Beispiel D1

Zu 200 g eines handelsüblichen Alkydharzes mit einem Ölgehalt von 34 % (® Alftalat AF 342 100 %) werden 220 g des Emulgators E1 zugegeben und bei 70 °C ca. 60 min gerührt, bis die Mischung homogen ist.
Nach Zugabe von 1 ml Ammoniakwasser (25 %) wird 70 g auf 70 °C erwärmtes E-Wasser sehr langsam unter heftigem Rühren zugetropft (ca. 2 Stunden). Man erhält eine milchige strukturviskose Dispersion.

### Beispiel D2

Zu 200 g eines handelsüblichen urethangruppenhaltigen ölfreien Polyesters mit einer OHZ von 120 mg/g und einer SZ von 3 mg/g werden 205 g des Emulgators E 3 zugegeben und bei 70 °C ca. 60 min gerührt, bis die Mischung homogen ist.
Nach Zugabe von 1 ml Ammoniakwasser (25 %) wird 50 g auf 70 °C erwärmtes E-Wasser sehr langsam unter heftigem Rühren zugetropft (ca. 1 Stunde). Man erhält eine milchige strukturviskose Dispersion.

### Beispiel D3

Zu 200 g eines handelsüblichen ölfreien Polyesters mit einer OHZ von 115 mg/g und einer SZ von 5 mg/g (Alftalat AN 950) werden 140 g des Emulgators E 3 zugegeben und bei 70 °C ca. 60 min gerührt, bis die Mischung homogen ist.
Nach Zugabe von 1 ml Ammoniakwasser (25 %) wird 50 g auf 70 °C erwärmtes E-Wasser sehr langsam unter heftigem Rühren zugetropft (ca. 1 Stunde). Man erhält eine milchige strukturviskose Dispersion.

### Beispiel D4

Zu 200 g eines handelsüblichen Alkydharzes mit einem Ölgehalt von 62 % (z.B. Alftalat AS 632 100 %) werden 230 g des Emulgators E 5 zugegeben und bei 50 °C ca. 60 min gerührt bis die Mischung homogen ist.
Nach Zugabe von 1 ml Ammoniakwasser (25 %) wird 70 g auf 70 °C erwärmtes E-Wasser sehr langsam unter heftigem Rühren zugetropft (ca. 2 Stunden). Man erhält eine milchige strukturviskose Dispersion.

Alle weiterhin aufgeführten Emulgatoren werden nach den oben beschriebenen Beispielen in Dispersionen verarbeitet.

## Patentansprüche

1. Wasserdispergierbare Polyurethan-Polyharnstoffe erhältlich durch Umsetzung von
a) einer Polyisocyanatkomponente, bestehend aus mindestens einem organischen Polyisocyanat, mit
b) mindestens einem mit Isocyanaten reaktiven Polyesterpolyol, herstellbar aus
i einer oder mehreren Dicarbonsäure(n)
ii einem oder mehreren Diole(n) und
iii gegebenenfalls einer oder mehreren polyfunktionellen Komponente(n), deren funktionelle Gruppen ausgewählt sind aus Hydroxyl- und Carboxylgruppen,
iv gegebenenfalls einer monofunktionellen Carbonsäure,
c) gegebenenfalls einem mit Isocyanaten reaktiven Fettsäurederivat
d) gegebenenfalls einer höherfunktionellen Verbindung (Funktionalität >2), deren funktionelle Gruppen ausgewählt sind aus Hydroxyl- und Carboxylgruppen,
e) einer Polyalkylenglykol-Komponente mit einer molaren Masse von 750 bis 10000 g/mol, und
f) einer aktiven Wasserstoff enthaltenden Verbindung, in der der aktive Wasserstoff mit den NCO-Gruppen schneller reagiert als Wasser,
unter Einhaltung eines Verhältnisses der Zahl der Isocyanatgruppen zur Zahl der Isocyanat-reaktiven Wasserstoffatome, bezogen auf alle Ausgangskomponenten a) bis f), von 0,6:1 bis 1:1, dadurch gekennzeichnet, daß der Massenanteil an von Polyester abgeleiteten Struktureinheiten im Polyurethan-Polyharnstoff 10 bis 60 % und der Massenanteil an von Polyalkylenglykol abgeleiteten Struktureinheiten 25 bis 75 % beträgt.

2. Verwendung der Polyurethan-Polyharnstoffe gemäß Anspruch 1 als Emulgatoren für in Wasser nicht allein dispergierbare Kunstharze bei der Herstellung von wäßrigen Kunstharzdispersionen, gegebenenfalls unter Verwendung weiterer Emulgatoren.

3. Polyurethan-Polyharnstoffe nach Anspruch 1, dadurch gekennzeichnet, daß der Massenanteil an von Polyester abgeleiteten Struktureinheiten 18 bis 30 % beträgt.

4. Polyurethan-Polyharnstoffe nach Anspruch 1, dadurch gekennzeichnet, daß der Massenanteil an von Polyalkylenglykol abgeleiteten Struktureinheiten 30 bis 60 % beträgt.

5. Polyurethan-Polyharnstoff nach Anspruch 1, dadurch gekennzeichnet, daß die Polyisocyanate a) Diisocyanate sind, von denen bis zu 10 % durch drei- oder höherfunktionelle Isocyanate ersetzt sind.

6. Polyurethan-Polyharnstoff nach Anspruch 1, dadurch gekennzeichnet, daß die Komponente b) ein lineares Polyesterpolyol ist.

7. Polyurethan-Polyharnstoffe nach Anspruch 1, dadurch gekennzeichnet, daß die Komponente b) eine Säurezahl von 1 bis 15 mg/g und eine Hydroxylzahl von 30 bis 180 mg/g aufweist.

8. Polyurethan-Polyharnstoffe nach Anspruch 1, dadurch gekennzeichnet, daß die Komponente b) ein über Trimethylolpropan verzweigtes Polyesterpolyol ist.

9. Polyurethan-Polyharnstoffe nach Anspruch 1, dadurch gekennzeichnet, daß die Komponente c) olefinische Doppelbindungen aufweist.

10. Polyurethan-Polyharnstoffe nach Anspruch 1, dadurch gekennzeichnet, daß die Komponente c) ein Fettalkohol und/oder ein Fettamin und/oder ein oxäthylierter Fettalkohol/Fettamin mit durchschnittlich 1 bis 30 Äthylenoxideinheiten pro Molekül ist.

11. Polyurethan-Polyharnstoffe nach Anspruch 1, dadurch gekennzeichnet, daß die Komponente c) ein oxäthylierter Fettalkohol mit durchschnittlich 1 bis 20 Äthylenoxid-Einheiten pro Molekül ist.

12. Polyurethan-Polyharnstoffe dadurch gekennzeichnet, daß die Komponente d) eine Bishydroxyalkancarbonsäure ist.

13. Polyurethan-Polyharnstoffe dadurch gekennzeichnet, daß die Komponente d) Dimethylolpropionsäure ist.

14. Polyurethan-Polyharnstoffe dadurch gekennzeichnet, daß die Komponente e) ein Polyoxyalkylenglykol mit einer zahlenmittleren molaren Masse von 750 bis 10.000 g/mol ist, und daß mindestens 80 von 100 mol der Oxyalkylengruppen Oxyäthylengruppen sind.

15. Polyurethan-Polyharnstoffe dadurch gekennzeichnet, daß die Komponente f) ein Polyalkylenpolyamin ist.

16. Polyurethan- Polyharnstoffe dadurch gekennzeichnet, daß die Komponente (f) Triäthylentetramin ist.

17. Verwendung der hydrophilen Polyurethan-Polyharnstoffe nach Anspruch 1 als Emulgator für Alkydharze.

18. Verwendung der hydrophilen Polyurethan-Polyharnstoffe als Emulgator für ölfreie Polyester.

19. Polyurethan-Polyharnstoffe nach Anspruch 1, dadurch gekennzeichnet, daß die Komponente b) ein mit ungesättigten Fettsäuren modifizierter Polyester ist.
